**Europäisches Patentamt**

**European Patent Office**

**Office européen des brevets**

(11) Publication number: **0 074 439**
**B1**

# (12) EUROPEAN PATENT SPECIFICATION

(45) Date of publication of patent specification: **20.12.89**

(21) Application number: **81304132.4**

(22) Date of filing: **09.09.81**

(51) Int. Cl.⁴: **B 67 C 3/20,** B 65 B 3/32,
G 01 F 11/02

(54) **Antidrip volumetric rapid filling machine usable with very viscous substances.**

(43) Date of publication of application:
**23.03.83 Bulletin 83/12**

(45) Publication of the grant of the patent:
**20.12.89 Bulletin 89/51**

(84) Designated Contracting States:
**DE GB IT**

(56) References cited:
**FR-A-1 328 918**
**GB-A- 840 499**
**GB-A- 944 610**
**US-A-3 637 116**
**US-A-4 095 628**
**US-A-4 300 603**

(73) Proprietor: **Laub, Louise Meredith**
**244 N. San Marino Avenue**
**San Gabriel California 91775 (US)**

(72) Inventor: **Laub, Hermann III**
**244 North San Marino**
**San Gabriel, California 91775 (US)**

(74) Representative: **Blanco White, Henry Nicholas**
**et al**
**ABEL & IMRAY Northumberland House 303-306**
**High Holborn**
**London WC1V 7LH (GB)**

Courier Press, Leamington Spa, England.

## Description

This invention relates to the provision of automatic machinery for the filling of containers, such as bottles, with flowable substances ranging from very thin to extremely viscous, and including substances which readily form suds or foam.

In particular the present invention is directed to overcoming problems in the prior art peculiar to the dispensing of extremely viscous substances.

Prior art

The closest prior art of which I am aware is disclosed in United States patent 3,870,089, which issued March 11, 1975; and 4,095,628, issued June 20, 1978.

Nearly all the principles and features disclosed in those two patents are operative in the system of the present invention, with only two exceptions—both arising from the peculiarities of extremely viscous products. As noted in those prior patents, the principles and features there disclosed are directed to dispensing products ranging from quite thin to quite viscous. The products which are the motivation for the present invention, by contrast, are outside that range—being "extremely" viscous.

As explained in US—A—3,870,089, very accurate volumetric filling requires a cyclically operating volumetric metering device, close control of liquid at all points in the system downstream of the metering device, and close control of air or other gas which is or might be in the system. In addition, as also explained in that patent, very accurate filling requires close monitoring of system operation to guard against partial fills, very clean operation, and finally, for a multiple-head filling machine, operation of all the heads under as nearly as possible identical conditions.

These principles are implemented by the following techniques, which are general background of the present invention: (1) a submersible dispensing nozzle which fills deep within the bottle, and which has (2) a closure device at its tip and (3) a device for sucking up drops of the fluid from the nozzle—but only when the tip is out of the body of the fluid; (4) positive-pressurized operation of the entire system at all times, (5) isolation of the product-dispensing duct and chambers from any pneumatic control system, (6) positioning the nozzle above the volumetric chamber, (7) a bubble-entrapment device upstream of the volumetric chamber; (8) sensors and interlocks to monitor and control system cycling; and (9) individual flow-rate adjustment for each head, and (10) common volume adjustment for all the heads.

Four other devices for implementing the principles enumerated above are particularly pertinent to the improvements of the present invention: (1) a biacting piston, (2) solid, positive mechanical stops for defining the ends of the piston travel within the volumetric chamber, (3) individual volume adjustment for each head, and (4) complementarily formed adjacent end-walls of the chamber and piston, at the bottom of the chamber and piston respectively, which act cooperatively to squeeze gas bubbles toward a port of the chamber so as to eliminate them from the system within the first few cycles of operation. These four features, like those mentioned in the preceding paragraph, were described in US—A—3,870,089. The principles which give rise to these four devices are just as important with extremely viscous products as with others, and the first three of the four remain useful, with modifications, in implementing the principles.

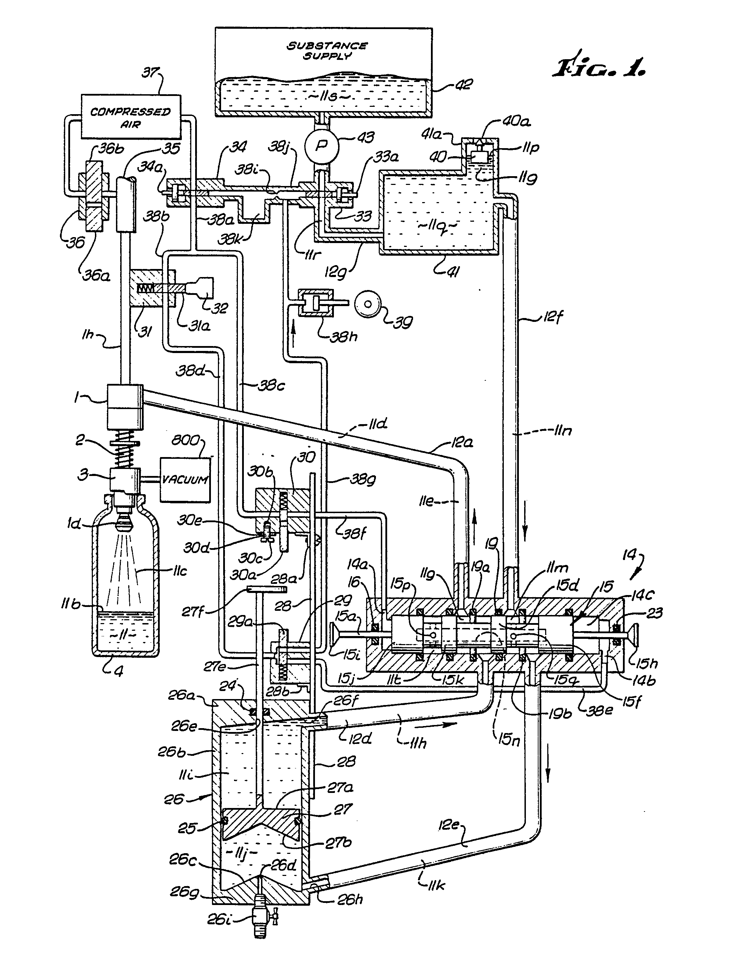

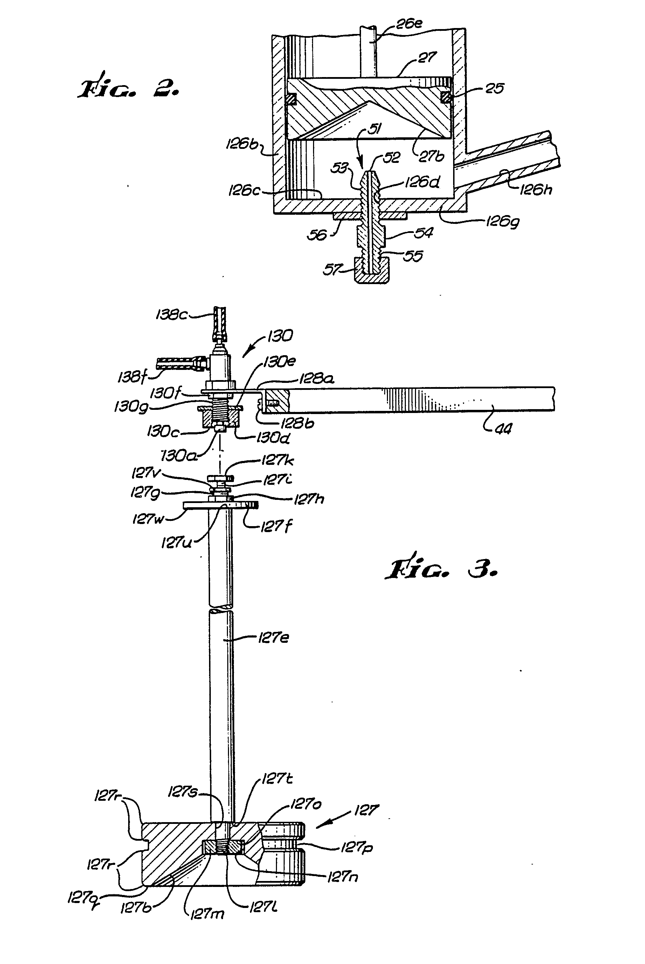

Referring to Fig. 2 of US—A—3,870,089, note that positive mechanical stopping action at the bottom of the piston stroke is provided by engagement of the lower surface 27b of the piston 27 with the lower internal surface 26c of the chamber 26; and the positive mechanical stopping action at the top of the piston stroke is provided by engagement of the actuator 27f, carried by piston rod 27e, with the pneumatic switch button 30a. In the latter case, the positive mechanical stopping action does not actually occur until the button "bottoms out" (or, as drawn, "tops out") against the inner end of the cavity provided for the button action in the switch body 30.

Pneumatic control signals for reversal of the piston 27 at the bottom of its stroke are generated by engagement of the actuator 27f with the button 29a of pneumatic switch 29; and such signals are generated at the top of the stroke by engagement of the actuator 27f with the previously mentioned switch button 30a. Both limit switches 29 and 30 are adjustable with respect to the cylinder 26.

Since lower limit switch 29 performs solely the reversing function while lower positive stop action is provided by the chamber end-wall 26c, the point at which the reversing signal occurs is inherently adjustable with respect to the point at which the positive mechanical stop is engaged. By contrast, since the upper limit switch 30 performs both the reversing function and the positive mechanical stop function, the reversing signal is not adjustable with respect to the mechanical stop. The fact of this nonadjustability becomes crucial in relation to extremely viscous products, as will be explained below.

Other prior-art systems generally lack the basic context of the present invention, namely the combination of automatically reversing dispensing systems with biacting pistons and positive stops. For example, the system of Buford et al., disclosed in United States patent, 3,447,281, issued June 3, 1969, discloses a biacting piston and limit switches for reversing the piston; however, the switches themselves are not positioned to halt the piston. Overtravel of the piston with respect to the switches is intended, as may be seen from the drawings, and reliance is placed entirely on the reversing signals, with no provision for operative positive mechanical stops. One of the points in Buford's specification where this fact appears is at column 11, lines 48 through 57, where it is stated, "When the piston reaches the right end of its travel, the enlargement 49 at the left end of the piston rod opens valve 204 to . . . admit a pneumatic signal . . . to . . . halt the filling operation . . ."

As to the bubble-expulsion technique mentioned above, the prior art other than US—A—3,870,089 does not appear to address itself to any comparable matter, since the prior art generally is not concerned with precision levels at which expulsion of bubbles is significant.

US—A—4,095,628 points out two additional principles and their implementations, improving on the system of US—A—3,879,089:

(1) A five-port, four-way valve used to control product flow in two different paths simultaneously, thereby reversing the flow connections to the biacting volumetric cylinder, can be simplified to a four-port valve by using an internal passageway formed within the valve spool.

(2) Foaming products are best dispensed with a variable-speed system—high flowrate for filling the parts of each container where foaming is least problematical, and lower flowrate for filling the parts of the container where foaming is most serious.

(The second principle is implemented by a timed constriction of the flow path between the product supply and the dispensing nozzle. In some cases the constriction is carried by the volumetric piston itself, on a spring which projects in front of the piston, and so is brought into operation only when the piston is within a particular distance of the end of its stroke.)

The simplified valve remains useful with extremely viscous materials. The principle and implementation of the two-speed system are independent of the extreme-viscosity case, and can be used either separately from or in conjunction with the extreme-viscosity provisions of the present invention. It may be noted, however, that relatively few products are both foaming and extremely viscous; and, moreover, that extremely viscous products move through the dispensing system so slowly that foaming tendencies tend to be suppressed without use of slower speeds at critical points in the fill.

US—A—4,095,628 is not addressed to the matter of bubble expulsion, but rather to foaming control speed variation. However, it is significant to note the speed-variation device illustrated in Fig. 2 of that patent is not readily compatible with the bubble-squeezing structure in Fig. 2 of US—A—3,870,089. Therefore it is necessary to choose, in practicing those heretofore disclosed inventions, between foaming control through speed variation and bubble removal. The present invention provides bubble removal in a manner which is at least in principle compatible with speed variation as shown in Fig. 2 of US—A—4,095,628.

In attempting to design, make and use the systems of US—A—3,870,089 and US—A—4,095,628 with extremely viscous substances to be dispensed, small imprecisions of initially unexplained origin have been noted.

Although the imprecisions involved were rather small, it is important to bear in mind the context of systems of this type. Under the law, packaging companies must fill each container with at least as much fluid as is nominally contained—i.e., as the label indicates. Therefore, whatever imprecision is present in a dispensing system must all be "placed", so to speak, above the nominal value; that is to say, the packager, not the consumer, must absorb the economic impact of any imprecision. Of course the requirement that every customer receive at least a nominal fill is properly founded in the concern for consumer protection; while the objectionability of significant overfill, in some industries, is compounded by the undesirability of waste per se—from an ecological or natural-resources conservation point of view.

Hence the importance of maintaining, with extremely viscous products as well as with less-viscous ones, the precision level indicated in US—A—3,870,089—1/28 ounce (1 cm$^3$), or roughly five drops, per gallon (3.8 litres) or 0.03%.

Brief summary of the invention

The present invention provides a dispensing system similar to those of US—A—3,870,089 and US—A—4,095,628 discussed above, but with certain improvements directed to use of the system to dispense extremely viscous products.

In searching for the source of small imprecisions mentioned above, it was discovered that there were actually two such sources contributing significantly to the imprecisions.

First, the bubble-expulsion device of US—A—3,870,089 did not operate to completely expel bubbles formed in extremely viscous substances. The viscosity and surface tension of the materials simply overcame the tendency for gas bubbles to flow out the lower port. This factor may have been emphasized by the lower piston speed necessarily produced by the flow of more-viscous materials through the various tubulations, ports and valves of the system. (As to the antifoaming feature of US—A—4,095,628, of course there was no provision for bubble expulsion at all.)

Captive gas bubbles in the space below the piston have a variable and erratic effect on the accuracy of fill—depending on system pressure and temperature, product batch, and the arrival of more gas to increase the size of the bubble or partial removal of the bubble through the port. As between successive fills from a particular chamber the effect may, merely for example, be opposite—that is, a slightly high fill into one container followed by a slightly low fill in the adjacent container.

Second, the reduced piston velocity produced by viscous flow through the system in effect desynchronized the stopping and reversing actions of the upper limit switch. This occurred because the functional pneumatic signal connection is made in a typical commercial pneumatic switch (as with a typical commercial electrical switch) before the button or other actuated element reaches the end of its mechanical travel.

In Fig. 2 of either US—A—3,870,089 or US—A—4,095,628, for example, the button 30a completes the pneumatic connection from pneumatic line 38c to pneumatic line 38f before the button 30a fully "bottoms out" into the recess in the switch body 30.

This phenomenon is either desirable or indifferent with respect to fluids of low or ordinary viscosity: where the piston is travelling quickly, if the pneumatic reversing signal is slightly early the piston reaches the mechanical stop before the reversing control valve (14 in my earlier patents) has time to shift the connections to the volumetric chamber. In this way the early signal is simply harmless. Even if the signal is early enough to start the reversing valve shifting action, the effect (so long as the shifting does not actually proceed to the halfway point) is merely to decrease the cross-sectional area of the flow paths for product through the reversing valve—slowing the piston down slightly so that "it bottoms out" the upper limit switch button 30a in its recess in switch body 30 with slightly less force, thereby extending the life of the apparatus.

With products which are viscous in the extreme, however, the piston travels much more slowly to begin with, and the early generation of the reversing signal has a very significant effect. First, as the reversing valve 14 begins to shift, the driving force on the piston 27 decreases; because of the lower initial speed there is less momentum in the moving piston and fluid. With these two factors operative, the piston slows down relatively quickly. This in turn gives the reversing valve 14 more time in which to complete its shifting action. When the valve approaches the halfway point in that action, flow is stopped entirely by the lands 15k, 15d blocking ports 11e and 11n, respectively; and the piston 27 too stops. If at this point the button 30a has not yet "bottomed out" within switch body 30, it never will—for the reversing valve 14 now begins to open the conduits with reversed connections, causing the piston to move downward without first reaching the positive mechanical stop at the top of the stroke.

This sequence of events of course results in a slightly short fill—the amount of discrepancy varying with system pressure, temperature, batch of product, lubrication of the seals at the piston and reversing-valve seal, pneumatic control-system pressure, stiction of the spool in the reversing valve, and so forth.

The problem cannot be corrected without modifying the equipment, since, as noted previously, the upperlimit reversing signal is not adjustable with respect to the upper-limit mechanical stop.

The invention provides a system for filling a container with flowable substance from a source thereof, comprising: means defining a flow path for passage of such substance from such a source toward such a container; a dispensing nozzle, connected to receive such substance from such source along the flow path, for discharging such substance into such container; a volumetric cylinder connected along the flow path upstream of the nozzle, and a biacting piston within the cylinder, adapted to premeasure the volume of such substance discharged along the flow path from such source into such container; control means, connected to control the direction of action of the piston; a mounting member fixed with respect to the cylinder; and control-signal means, carried on the mounting member for adjustment with respect to the piston, and adapted and operatively connected to respond to the piston by providing a signal to the control means to reverse the piston. Such a system is known from US—A—4,095,628. The invention is characterised by a positive mechanical stop, also carried on the mounting member for adjustment in common with the control-signal means, for halting the piston; and means, also carried on the mounting member with the positive mechanical stop and control-signal means, for effecting a relative adjustment of the positive mechanical stop and the control-signal means.

The system may be one wherein the volumetric cylinder has an inner cylindrical surface the longitudinal axis of which is generally vertical, said surface terminating in a lower end wall; wherein the piston has a lower end surface facing said one end wall; wherein the lower end surface of the piston is concave, to trap at the top of the concave surface any gas bubbles which are between that surface and the end wall; and which comprises a sealable gas-bleed duct which extends from outside the cylinder to a point which, when the piston is at the low extreme of its motion, is adjacent to the top of the concave surface of the piston.

Fullest realization of the advantages of the instant invention requires bringing into action the principles introduced in the present disclosure, as well as most of those disclosed in US—A—3,870,089 and US—A—4,095,628 and enumerated above. As these principles are functionally combined in concert the resulting incremental capability, with the addition of each principle, becomes qualitatively different. It is of course possible to omit some of these principles and suffer the loss of this qualitative difference in capability only under extraordinary conditions, such as certain kinds of system malfunction. Some of the features therefore are regardable as secondary, and their omission from a particular device shall not diminish the applicability to such device of those of the appended claims which do not recite such secondary features.

Various forms of system constructed in accordance with the invention for filling a container with flowable substances will now be described by way of example only with reference to the accompanying drawings, in which:

Fig. 1 is an elevation view, mostly in section, showing a first form of dispensing system according to the present invention, in which pneumatic valves are employed as sensors to control system sequencing.

Fig. 2 is a view to Fig. 1, showing a second form of one part of the system shown in Fig. 1.

It is to be understood that Figs. 1 and 2 are somewhat schematic, in that the details of construction and assembly are not illustrated—the volumetric chamber, for example, being shown as a unitary block with a hollowed-out interior. In practice, of course, it would be impractical to make a structure in such a fashion, and virtually impossible to position the piston within such a structure, the chamber actually being made as a plurality of parts appropriately held together. One skilled in the art of mechanical design is able to provide such parts and fastenings on the basis of the schematic drawings herein.

Fig. 3 is a more realistic, construction-indicative view of alternative versions of the key features of the preferred embodiment shown in Fig. 1—in particular, the piston, piston rod, and upper limit switch and positive stop. Fig. 3 is an elevation, partly in cross-section.

Detailed description of the preferred embodiments

As shown in Fig. 1, the switch body 30 is provided with a tapped hole 30b, into which is threaded a screw 30d whose head forms a positive mechanical stop surface 30c. A lock-nut 30e on the screw 30d is used to cinch against the surface of the switch body 30, to prevent casual rotation of the screw 30d.

The switch button 30a in switch 30 functions as in my previous systems to transmit a reversing signal from pneumatic supply line 38c via line 38f to the spool valve 14; however, the stop surface 30c of the screw 30d now performs the function of halting the piston 27, so that relative adjustment of the reversing signal trigger point and positive stop is now possible.

For use with extremely viscous products, the stop surface 30c is adjusted so that the actuator 27f reaches the stop surface 30c at exactly the same time the actuator 27f depresses button 30a to the depth required to initiate the reversing signal. The system may be used set this way for less-viscous products, if desired, or alternatively the slight cushioning effect provided by a slightly early reversing signal can be exploited by screwing the screw 30d further into the switch body 30 or removing the screw 30d entirely.

It is highly advantageous to make the stop 30c and signal-generating switch 30, 30a adjustable in common with respect to the volumetric piston 27, as well as relatively adjustable with respect to each other—so that coarse or fine volume adjustments may be made by adjusting the stop 30c and switch 30, 30a together, once the type of product to be dispensed has been established and the stop 30c set accordingly. Otherwise it would be necessary to adjust both the stop 30c and switch 30a independently each time a trim adjustment of the volume dispensed was desired.

The common adjustment is illustrated, for the one-head system of Fig. 1, by securing the switch body 30 to a mounting member or bracket 28a, adjustably fixed with respect to the cylinder 26 by means of the intermediary plate 28, whose lower end is secured to the cylinder 26.

The actuator 27f is attached to piston rod 27e, which passes through the aperture 26e of the volumetric chamber top wall 26a, sealed by sliding seal 24. The lower end of the piston rod 27e is affixed to or integral with the piston 27, so that impingement of the actuator 27f upon positive mechanical stop surface 30c halts the piston 27. The piston 27 has a sliding seal 25 to isolate the part of the chamber above the piston from the part below while permitting motion of the piston vertically in the chamber. The under-surface 27b of the piston is concave as shown, to collect and trap bubbles of air or other gas which may be in the chamber 26 between the piston 27 and lower wall surface 26c.

The bottom internal end-wall 26g of the cylinder has a protrusion 26c which, when the piston 27 is at its lowest point, extends into the top of the concavity of the piston lower surface 27b. This protrusion may take any of a great variety of forms—for example, it may generally complement the shape of the piston under-surface 27b as shown. A duct 26d extends from outside the chamber to the top of the protrusion, and thus (when the piston is at the lowest extreme of its motion) to a position adjacent the top of the concave surface 27b of the piston. The outer end of the duct 26d should be suitably terminated, as for example by threading into the lower end-wall 26g from the outside a conventional valve 26i which may be opened to bleed off air from the concavity or closed for normal operation of the dispensing system.

In normal operation, substance 11s from the supply 42 passes pressure regulator 43 and incomplete-fill automatic shutdown valve 33, with reset button 33a, and tubulation 11r, to air de-entrainment vessel 41 which has a dome section 41a adapted to trap and accumulate air bubbles in the space above liquid level 11q. Liquid 11g within the dome section supports float 40 to engage valve 40a with its seat until the level 11p falls below a particular height, at which point excess air blows off at valve 40a permitting the float 40 and valve 40a to return upward to a closed condition.

Fluid with most of the entrained air removed proceeds at 12f into annular space 11m within spool valve 14. The fluid passes from annular void 11m via tube 12e into port section 26h of the metering chamber 26, raising the piston 27—which in turn impels fluid out of the chamber at 26f and via tube 12d to annular cavity 11g within the spool valve 14. Thence the fluid proceeds via tube 12a to the dispensing-nozzle assembly 1, 2 and 3.

As the piston 27 rises during this dispensing operation, rod 27e also rises, carrying actuating member 27f into contact with button 30a of pneumatic switch 30 and stop-surface 30c. As the actuating member 27f reaches the stop-surface it also triggers the pneumatic switch 30, permitting compressed air from supply 37 to flow by incomplete-fill automatic shut-down valve 34 (with reset button 34a) and via tubing 38a and 38c and the aforementioned valve 30 into tubing 38f and port 14a of the spool valve, impelling the spool 15 fully to the right (with respect to the illustration of Fig. 1) within the spool barrel, to a position which is not illustrated here. (That position is illustrated in Fig. 2e of US—A—4,095,628).

In that rightward position, fluid entering from tube 12f flows via annular cavity 11g formed between lands 15d and 15k directly to tube 12d, reversing the direction of the metering piston so that the piston moves downward, propelling fluid outward via port 26h and tube 12e to annular space 11m formed between lands 15d and 15f, and thence to radial holes 15q into central bore 15n of the spool, then out through radial holes 15p into the annular space 11t between lands 15j and 15k, now aligned with tube 12a. Fluid then proceeds out through tube 12a to the dispensing assembly 1, 2 and 3 as is the case with the spool in the first position discussed.

In short, the spool valve reverses the connections to the metering cylinder while preserving the directionality of fluid flow from supply to dispensing nozzle—in effect controlling the flow of fluid in two paths simultaneously.

As explained fully in US—A—3,870,089, element 32 of Fig. 1 is a CONTAINER READY cam which actuates button 31a of pneumatic switch 31 so that pneumatic selector switch 29 receives excitation pressure only when a container is ready to be filled—that is, when an empty container has been substituted for the preceding full one. If button 31a is depressed when the metering piston is not fully down, ready to begin a new fill, then pressure is applied through line 38d and pneumatic switch 29 to line 38g, which shuts down the fluid supply at switch 33, rings a bell 39 at actuator 38h, and then shuts down the air supply itself via pneumatic switch 34, actuated via a time-delay system composed of constriction 38i and pneumatic capacitive vessel 38k.

However, if button 31a is pressed after the piston has fully bottomed out, the pneumatic signal from switch 31 and line 38d is applied by switch 29 via line 38e and port 14b to return the spool 15 to its position illustrated in Fig. 1.

For schematic purposes, provision for raising and lowering of the dispensing assembly 1, 2 and 3 is represented by buttons 36a and 36b of switch 36, and the attached components. Button 36a of pneumatic switch 36 applies compressed-air pressure to air cylinder 35 to raise the dispensing assembly 1, 2 and 3 by means of support shaft 1h, to permit removal of the full container. Button 36b of switch 36 deactivates the air cylinder 35 so that the dispensing assembly can descend into the next container. In practice, automatic control (such as the cam described in my patent 3,870,089) of buttons 36b and 36a—or of the rod 1h mechanically—is more often used to raise and lower the dispensing assembly in synchronism with container feed and removal.

In any event when the dispensing assembly is lowered into and onto a waiting container, and the piston is waiting to begin a new stroke, the valve spool shifts back to its Fig. 1 position and a new filling cycle begins.

(It is assumed here, as in the prior patents, that the pneumatic signal previously applied to the spool at port 14a has—by the time the pneumatic signal is applied to the opposite end at port 14b—dissipated sufficiently to permit the spool to shift leftward. Such dissipation may normally be provided by slow leaks at seal 16, or in the tubing connections; if not, a calibrated leak may be provided for this purpose. The same consideration of course applies to the next rightward shift, and needed signal dissipation from the area of port 14b.)

Element 1 of Fig. 2 is a supply body, attached by internal centerpin to tip 1d. The supply body and tip coact with supply sleeve 2 and selectable orifices within the supply body and springs surrounding supply sleeve 2 to permit fluid flow at controlled rates from tube 12a into container 4 at 11c, providing a rising level 11b of fluid 11 in the container. Further, element 3 is a vacuum hood which draws off spray and droplets via a vacuum supply 800 and small conduits within tip 1d, under various conditions—all as detailed in my first above-mentioned patent.

Various alternative configurations of the spool valve 14 and the connecting tubulations 12a, 12f, 12e and 12d are discussed in detail in US—A—4,095,628.

The spool extensions 15a and 15h shown and identified in Fig. 1 hereof serve the same functions as described in that previous patent, namely to indicate externally the position of the spool within the valve barrel and to provide a means for breaking free the spool in the event that cold flow of the seals (when the machine is not operating) produces more static friction that can be overcome by operation of the pneumatic drive system. The shafts 15a and 15h are sealed at 16 and 23 respectively by compliant seals.

As noted earlier, it is not necessary for the bottom internal wall 26c of the chamber 26 to complement the shape of the under-surface 27b of the piston 27, so long as the air-bleed duct reaches to the top of the concavity in the under-surface 27b of the piston when the piston is at the bottom of its stroke. A great variety of configurations of the bottom internal wall 26c satisfy that constraint. For example, as illustrated in Fig. 2 the wall 126c may be substantially flat, but defining a generally vertical threaded hole 126d—through which is screwed a mating rod 51.

The rod 51 has external threads matching the internal threads of the hole 126d; advantageously has a set of flats 54 for adjustment by wrench or pliers from outside the chamber, and carries a lock-nut 56 which may be cinched against the outer surface of the chamber end-wall 126g to prevent casual rotation. The rod 51 of course defines a gas-bleeding duct 52 which extends from outside the chamber to a point which, when the piston is at the low extreme of its motion, is adjacent the top of the concave surface of the piston. The rod 51 also has external threads 55 for attachment of a sealing cap 57 to close the duct 52.

It is possible in principle to practice this part of the present invention in conjunction with the internal-constriction antifoaming feature of US—A—4,095,628. The rod 51 may be made as an insert threaded through the center of the low-flowrate adjustment screw (57 in Fig. 2 of that patent) and through the central hole (52 in that figure) of the constricting washer (51 in that figure). The stiff spring (50 in that drawing) which supports the flow-constricting washer may be attached to the concave underside of the piston 27 without interfering with the function of the concavity in collecting gas bubbles.

However, with extremely viscous products the maximum dispensing speed is sufficiently slow that foaming is not usually a problem; therefore, the two-speed system of US—A—4,095,628 is not usually necessary.

Fig. 3 shows preferred embodiments of the present invention in a less-schematic way. As indicated, the piston, piston rod and actuator are not integrally constructed, but are separate parts permanently secured together. In particular, the piston rod 127e carries threads 127g and 127l on its upper and lower ends respectively. The rod also has turned-down end segments defining shoulders 127u and 127t at its upper and lower ends, respectively, for stabilizing the actuator plate 127f and piston 127.

At the lower end of the rod 127e its turned-down portion passes through a hole 127s defined in the piston body, and a nut 127m is screwed onto the threads 127l and cinched hard against the flat surface 127o at the end of the recess 127n. Thus the piston 127 is held between the flat 127t and the nut 127m. A like arrangement at the top of the rod 127e, though not cut away in the illustration, holds the actuator plate 127f firmly between shoulder 127u and nut 127h—the threaded or turned-down end segment of the rod passing through a tight-fitting hole (not shown) in the actuator 127f.

A small screw 127i is screwed into the end of the rod 127e, which is drilled and tapped for that purpose, and a lock-nut 127v cinches the screw 127i against the top end of the rod 127e to prevent casual rotation of the screw. The top surface 127k of the screw 127i engages the air button 130a at the top of the piston stroke; the bottom surface 127w of the actuator plate 127f engages the other air button (not shown here, 29a in Fig. 1) at the bottom of the piston stroke. Adjustment of the screw 127i in the end of the rod 127e thus offers one means of obtaining a trim adjustment of the stroke, and thus the volume dispensed.

The under-surface 127b of the piston 127 is concave as shown, terminating in a recess 127n for the retaining nut 127m; the recess is just large enough to permit installation of the nut 127m on the end of the rod, excess clearance being undesirable as it opens the way for an excess residual air bubble in the recess. An O-ring groove 127p is provided in the outer cylindrical surface of the piston 127; if desired, more than one such groove and O-ring may be provided. For strength, the extreme bottom end of the piston is an annular flat 127q, rather than a sharp edge, and all of the outer corners 127 likewise are beveled, as indicated.

The pneumatic switch 130 is connected to an air-supply line 138c and a signal line 138f. When the button 130a is depressed to a certain point, the switch permits the compressed air from the supply line 138c to proceed into the signal line 138f, for the purposes previously described in relation to the correspondingly numbered components 38c and 38f of Fig. 1. However, the button 130a does not "bottom out" at that certain point, but rather at a deeper point of motion into the switch body 130. To achieve the synchronization described earlier, a stop-nut 130d is threaded onto the threaded end 130g of the switch body 130, to prevent the upper actuating surface 127k of the screw 127i on the piston rod 127e from advancing past the certain point at which the control signal arises. A lock-nut 130e also is threaded onto the threads 130g of the switch body 130, and cinched tightly against the stop-nut 130d to prevent casual rotation of the stop-nut. The lower surface 130c of the stop-nut 130d now engages the upper surface 127k of the screw 127i, acting as a positive mechanical stop to halt the upward motion of the piston.

Also threaded onto the threads 130g of the switch 130 is a retaining nut 130f, which grips a bracket 128a. The latter is held securely by screw 128b to a support 44. This support may be completely stationary, or, in the case of a multiple-head system such as described in US—A—3,870,089 may have analogous switches for the other heads mounted to it, and may be movable vertically to provide common volumetric adjustment of all the heads together. The action of plate 44 in providing this function may be seen in Fig. 3 of that patent, where the plate 44 is shown supporting switches 530, 630, 730, etc., and being vertically adjustable through a mechanism comprising elements 45 through 55, and 49a and 61, of that figure, and of course described in detail in that patent.

The support 44, bracket 128a and switch body 130 together form a mounting member adjustably fixed with respect to the cylinder. The button 130a and the operatively connected internal parts of the switch 130, along with the air lines 138f and 138c, form control-signal means carried on the mounting member for adjustment with respect to the piston, and adapted and operatively connected to respond to the piston by providing a signal to the control means (valve 14) to reverse the piston. The stop-nut 130d and in particular its end-surface 130c form a positive mechanical stop, also carried on the mounting member for adjustment in common with the mechanical stop, for halting the piston.

The threads 130g, mating internal threads of the stop-nut 130d, outer gripping surfaces of the stop-nut 130d, and lock-nut 130e form means, also carried on the mounting member (switch body 130) with the positive mechanical stop (130c) and control-signal means (130a), for effecting a relative adjustment of the positive mechanical stop and the control-signal means.

It remains only to describe the use of the present invention in bleeding off air from the concavity in the bottom of the piston. When the system (Fig. 1) is started up, bubbles of air or other gas may be created or be present in the supply 42, the regulator 43, the bubble trap 41, the valve 14, the volumetric cylinder 26, or any of the interconnecting tubing. Such bubbles will shortly migrate with the flow of product into the volumetric cylinder 26, if they do not start there. Bubbles entrained in the substance 11i in the top of the cylinder 26 are prevented from remaining there: the shaping of the upper internal end-wall 26a and the inclination of tubulation 12d tend to facilitate sweeping of the bubbles back out the tube 12d, through the valve 14 and the tube 12a, and forcibly out the nozzle 1, 2 and into a bottle 4.

However, bubbles arising or arriving in the substance 11j in the bottom of the cylinder 26 have a tendency to remain there, riding up and down with the piston 27. It will be recalled that in the system of US—A—3,870,089 provision was made for squeezing the bubbles out of that part of the chamber and into tubulation 12e for expulsion at the nozzle; but that such provision was discovered to be only partially effective in use with extremely viscous products. Thus smaller bubbles in that system tended to ride up and down with the piston and remain in the lower portion of the chamber—in an erratic and uncontrolled fashion, as described above. With the present invention, such bubbles are deliberately and systematically trapped and localized by the shape of the concavity 27b, to a region just corresponding with the top end of the duct 26d—and then are bled off from that region, through the duct.

After the system has been started up and operated through a few cycles so that the concavity has trapped as much of such air or other gas as there is to be trapped, the system is stopped with the piston at the bottom of its stroke. The valve 26i (or cap 57 in Fig. 2) is then opened, and the actuator 27f physically restrained by the operator (or by a suitable mechanical provision linked to the valve 26i) from rising; and the product feed is started again. The operator observes what issues from the open-air end of the valve 26i (or rod 51): at first a small amount of product, possibly left over from the previous batch of substance dispensed from the machine; and then air or other gas, as the pocket of such gas is forced by the rising product level within the concavity to escape through the duct. Eventually the operator will observe once again a flow of product from the valve 26i (or rod 51), and at that time will close the valve 26i (or halt the product feed and replace the cap 57).

Periodically the system can be stopped and this process is repeated, with the operator noting the amount of gas found on each such occasion. In this way the operator can get a feeling for the frequency with which the process is needed—with the particular product and under the other conditions obtaining. In many cases the initial bleed after startup (or after each daily startup) will be found sufficient; on the other hand, relatively frequent bleed-off will be found necessary in certain cases—as, for example, with products subject to cavitation in the volumetric cylinder.

With respect to the language of certain of the appended claims, the following comment may be helpful.

The screw 127i is an extension of the piston rod 127e, and thus an extension of the piston 127 itself. Provided that the screw is not touching the switch button 130a, manipulation of the screw therefore changes the distance between the switch and the piston. Consequently it is correct to say that the adjustment screw 127i constitutes a means of obtaining adjustment of the pneumatic switch 130 with respect to the piston. This is true even though the bracket 128a which holds the pneumatic switch 130 may be nonadjustably stationary with respect to support 44, and the support 44 may be nonadjustably stationary with respect to the cylinder.

On the other hand, if the bracket 128a and support 44 are (as will more likely be the case) fixed adjustably with respect to the cylinder, then they provide additional, or other means of adjustment of the pneumatic switch 130 with respect to the piston, wherever the piston may be with respect to the cylinder.

Thus the language "control signal means [e.g., button 130a] carried on the mounting member [e.g., bracket 128a and support 44] for adjustment with respect to the piston" is meant to describe either or both of two arrangements for providing stroke adjustment: (1) adjusting the effective length of the piston or cylinder, and (2) adjusting the switch position with respect to the cylinder.

It is also correct in either case to speak of the mounting member (130g, 130, 128a, 44) as fixed (whether or not adjustably) with respect to the cylinder.

It will be apparent that the details presented above are intended as merely illustrative, not as limiting the scope of my invention—which scope is intended to be determined by reference to the appended claims.

## Claims

1. A system for filling a container with flowable substance from a source thereof, comprising: means defining a flow path for passage of such substance from such a source toward such a container; a dispensing nozzle, connected to receive such substance from such source along the flow path, for discharging such substance into such container; a volumetric cylinder connected along the flow path upstream of the nozzle, and a biacting piston within the cylinder, adapted to premeasure the volume of such substance discharged along the flow path from such source into such container; control means, connected to control the direction of action of the piston; a mounting member fixed with respect to the cylinder; and control-signal means, carried on the mounting member for adjustment with respect to the piston, and adapted and operatively connected to respond to the piston by providing a signal to the control means to reverse the piston; characterised by a positive mechanical stop, also carried on the mounting member for adjustment in common with the control-signal means, for halting the piston; and means, also carried on the mounting member with the positive mechanical stop and control-signal means, for effecting a relative adjustment of the positive mechanical stop and the control-signal means.

2. A system as claimed in claim 1, wherein the control-signal means comprises a switch having: a body, an actuating button which is retained by the body, is spring-loaded outwardly along a line of motion with respect to the body, and is actuated by pressing it inwardly along the same line of motion, and threads defined by the body; and the positive mechanical stop comprises a threaded member secured to the body by means of said threads, by rotation of the member in a threading motion having a longitudinal axis; the longitudinal axis of the threading motion having a component parallel to the said line of motion of the button.

3. A system as claimed in claim 2, comprising a threaded lock-member, operable on the threads of the said threaded member, for locking the said threaded member in position with respect to the body.

4. A system as claimed in any one of claims 1 to 3, wherein the mounting member is a bracket that holds the switch firmly and is adjustably secured with respect to the cylinder.

5. A system as claimed in any one of claims 1 to 4, comprising a second positive mechanical stop fixed with respect to the cylinder, for halting the piston at the other end of its stroke from that at which the first-mentioned stop halts the piston; and means for adjusting the effective length of the piston as between its surface which engage the two positive mechanical stops respectively.

6. A system as claimed in any one of claims 1 to 5, wherein the volumetric cylinder has an inner cylindrical surface the longitudinal axis of which is generally vertical, said surface terminating in a lower end wall; wherein the piston has a lower end surface facing the said end wall; wherein the lower end surface of the piston is concave, to trap at the top of the concave surface any gas bubbles which are between that surface and the end wall; and which comprises a sealable gas-bleed duct which extends from outside the cylinder to a point which, when the piston is at the low extreme of its motion, is adjacent to the top of the concave surface of the piston.

7. A system as claimed in claim 6, which comprises a port defined by the cylinder structure at the lower end of the cylinder, and connected alternately to receive such substance from such a source and to discharge such substance to such containers.

8. A system as claimed in claim 6 or claim 7, wherein the lower end wall of the cylinder is convex, and has a protrusion to a point which, when the piston is at the low extreme of its motion, is adjacent the top of the concave surface of the piston; and the duct is defined in the protrusion.

9. A system as claimed in claim 6 or claim 7, which comprises a hole defined in the lower end wall of the cylinder and a rod adjustably positioned in the hole, with one end of the rod inside the cylinder, for longitudinal adjustment of the rod into and out of the cylinder, the duct being defined in the rod; the hole being so positioned and oriented and the rod being so dimensioned as to permit adjustment of the inner end of the rod adjacent to the top of the concave surface of the piston, when the piston is at the lowest point of its motion.

10. A system as claimed in claim 9, wherein the hole and the rod are threaded together, and the rod is adjustable by screwing it partway into or out of the hole; and the rod carries a lock-nut arranged to be tightened against the cylinder endwall, to secure the adjustment, and a cap threaded over the end of the rod to seal the duct.

**Patentansprüche**

1. Ein System für das Füllen eines Behälters mit fließfähiger Substanz von einer Quelle derselben, umfassend: Mittel zum Definieren einer Fließstrecke für die Überführung solcher Substanz von einer solchen Quelle zu einem solchen Behälter; eine Austragdüse, angeschlossen zum Empfang solcher Substanz von solcher Quelle längs der Fließstrecke für den Austrag solcher Substanz in solchen Behälter; einen volumetrischen Zylinder, angeschlossen längs der Fließstrecke stromaufwärts der Düse, und einen doppelwirkenden Kolben innerhalb des Zylinders, ausgebildet zum Zumessen des Volumens solcher Substanz, ausgetragen längs der Fließstrecke von solcher Quelle in solchen Behälter; Steuermittel, angeschlossen zum Steuern der Wirkrichtung des Kolbens; ein relativ zum Zylinder feststehendes Montageglied; und Steuersignalmittel, getragen von dem Montageglied für Justage relativ zum Kolben und ausgebildet sowie in Wirkverbindung zum Ansprechen auf den Kolben durch Liefern eines Signals an die Steuermittel zum Reversieren des Kolbens, gekennzeichnet durch einen mechanischen Zwangsanschlag, ebenfalls von dem Montageglied getragen für Justage gemeinsam mit den Steuersignalmitteln, für das Anhalten des Kolbens; und Mittel, ebenfalls von dem Montageglied mit dem mechanischen Zwangsanschlag und Steuersignalmitteln getragen, für das Bewirken eine relativen Justage des mechanischen Zwangsanschlags und der Steuersignalmittel.

2. Ein System nach Anspruch 1, bei dem die Steuersignalmittel einen Schalter umfassen mit: einem Körper, einem von dem Körper gehaltenen Betätigungsknopf, der unter Federbelastung auswärts relativ zu dem Körper längs einer Bewegungslinie steht und betätigt wird durch Einwärtsdrücken des Knopfes längs derselben Bewegungslinie, und in dem Körper ausgebildete Gewindegänge; und bei dem der mechanische Zwangsanschlag ein an dem Körper mittels der genannten Gewindegänge durch Drehung in einer Schraubbewegung mit einer Längsachse befestigtes Gewindeglied umfaßt; welche Längsachse der Schraubbewegung eine Komponente parallel zu der genannten Bewegungslinie des Knopfes aufweist.

3. Ein System nach Anspruch 2, umfassend ein mit Gewindegängen versehenes Sicherungsglied, betätigbar auf den Gewindegängen des genannten Gewindeglieds, für das Sichern des genannten Gewindeglieds in seiner Relativposition bezüglich des Körpers.

4. Ein System nach einem der Ansprüche 1 bis 3, bei dem das Montageglied ein Bügel ist, der den Schalter festhält und justierbar relativ zu dem Zylinder festlegbar ist.

5. Ein System nach einem der Ansprüche 1 bis 4, umfassend einen zweiten bezüglich des Zylinders feststehenden mechanischen Zwangsanschlag für das Anhalten des Kolbens am anderen Ende seines Hubs, abgewandt jenem, an dem der erstgenannte Anschlag den Kolben anhält; und Mittel zum Justieren der wirksamen Länge des Kolbens wie zwischen seinen Oberflächen, die jeweils an den beiden mechanischen Zwangsanschlägen anschlagen.

6. Ein System nach einem der Ansprüche 1 bis 5, bei dem der volumetrische Zylinder eine innere zylindrische Oberfläche aufweist, deren Längsachse generell vertikal ist, welche Oberfläche in eine untere Endwandung ausläuft; bei dem der Kolben eine untere, der genannten Endwandung gegenüberliegende Endfläche aufweist; bei dem die untere Endfläche des Kolbens konkav ist zum Einfangen von Gasblasen, welche sich zwischen dieser Oberfläche und der Endwandung befinden können, an der Spitze der konkaven Oberfläche; und das eine abdichtbare Gasblaßleitung umfaßt, die sich von außerhalb des Zylinder zu einem Punkt erstreckt, der—wenn der Kolben an seinem unteren Bewegungsendpunkt steht—nahe der Spitze der konkaven Oberfläche des Kolbens ist.

7. Ein System nach Anspruch 6, das eine Öffnung, begrenzt von der Zylinderstruktur, am unteren Zylinderende umfaßt, die alternativ angeschlossen ist zum Empfang solcher Substanz von solch einer Quelle und zum Austrag solcher Substanz zu solchen Behältern.

8. Ein System nach Anspruch 6 oder 7, bei dem die untere Endwandung des Zylinders konvex ist und eine Ausladung zu einem Punkt aufweist, der—wenn der Kolben an seinem unteren Bewegungsendpunkt steht—nahe der Spitze der konkaven Kolbenfläche ist; und die Leitung ist in der Ausladung ausgebildet.

9. Ein System nach Anspruch 6 oder 7, das ein in der unteren Endwandung des Zylinders ausgebildetes Loch und eine justierbar in dem Loch positionierte Stange umfaßt mit einem Ende der Stange im Zylinder für Längsjustage der Stange in den Zylinder hinein und aus dem Zylinder heraus, wobei die Leitung in der Stange ausgebildet ist; welches Loch so positioniert und orientiert ist, und welche Stange so dimensioniert ist, daß die Justage des inneren Endes der Stange nahe der Spitze der konkaven Oberfläche des Kolbens ermöglicht wird, wenn sich der Kolben am tiefsten Punkt seiner Bewegung befindet.

10. Ein System nach Anspruch 9, bei dem das Loch und die Stange miteinander verschraubt sind und die Stange justierbar ist durch teilweises hineinschrauben in das oder Herausschrauben aus dem Loch; und bei dem die Stange eine Sicherungsmutter trägt, ausgebildet zum Anziehen gegen die Zylinderendwandung, um die Justage zu Sichern, und wobei eine Kappe auf das Ende der Stange geschraubt ist zum Abdichten der Leitung.

## Revendications

1. Un système destiné à remplir un conteneur d'une substance fluide à partir d'une source de celle-ci, comprenant: des moyens définissant une voie d'écoulement pour le passage de cette substance depuis cette source vers ce conteneur; un ajutage de distribution, relié pour recevoir cette substance depuis cette source le long de la voie d'écoulement, pour envoyer cette substance dans ce conteneur; un cylindre volumétrique relié le long de la voie d'écoulement en amont de l'ajutage, et un piston à double action à l'intérieur du cylindre, apte à mesurer au préalable le volume de cette substance envoyée le long de la voie d'écoulement depuis cette source dans ce conteneur; des moyens de commande, reliés pour commander le sens d'action du piston; un organe de montage fixe par rapport au cylindre; et des moyens de signaux de commande, portés sur l'organe de montage en vue d'un réglage par rapport au piston, et apte à répondre au piston en fournissant un signal aux moyens de commande pour inverser le piston, et relié en fonctionnement à ce piston; caractérisé par un arrêt mécanique positif, porté également sur l'organe de montage destiné au réglage en commun avec les moyens de signaux de commande, pour arrêter le piston; et des moyens, également portés sur l'organe de montage avec l'arrêt mécanique positif et les moyens de signaux de commande, pour effectuer un ajustement relatif de l'arrêt mécanique positif et des moyens de signaux de commande.

2. Un système selon la revendication 1, dans lequel les moyens de signaux de commande comprennent un commutateur possédant; un corps, un bouton d'actionnement qui est retenu par le corps, et sollicité élastiquement vers l'extérieur le long d'une ligne de mouvement par rapport au corps, et est actionné en l'enfonçant vers l'intérieur le long de cette ligne de mouvement, et des filetages définis par le corps; et l'arrêt mécanique positif comprend un organe fileté fixé au corps au moyen desdits filetages, par rotation de l'organe dans un mouvement de vissage présentant un axe longitudinal; l'axe longitudinal du mouvement de vissage possédant une composante parallèle à ladite ligne de mouvement du bouton.

3. Un système selon la revendication 2, comprenant un organe de verrouillage fileté, susceptible de fonctionner sur les filetages dudit organe fileté, pour verrouiller ledit organe fileté en position par rapport au corps.

4. Un système selon l'une quelconque des revendications 1 à 3, dans lequel l'organe de montage est un support qui tient fermement le commutateur et qui est fixé de façon réglable par rapport au cylindre.

5. Un système selon l'une quelconque des revendications 1 à 4, comprenant un deuxième arrêt mécanique positif fixé par rapport au cylindre, pour arrêter le piston à l'extrémité de sa course autre que celle à laquelle le premier arrêt mentionné arrête le piston, et des moyens pour ajuster la longueur effective du piston en ce qui concerne la distance entre ses surfaces qui engagent respectivement les deux arrêts mécaniques positifs.

6. Un système selon l'une quelconque des revendications 1 à 5, dans lequel le cylindre volumétrique possède une surface cylindrique intérieure dont l'axe longitudinale est généralement vertical, ladite surface se terminant dans une paroi inférieure d'extrémité; dans lequel le piston possède une surface d'extrémité inférieure tournée vers ladite paroi d'extrémité; dans lequel la surface inférieure d'extrémité du piston est concave, pour piéger au sommet de la surface concave toutes bulles de gaz qui sont situées entre cette surface et la paroi d'extrémité; et qui comprend un conduit d'évacuation de gaz qui peut être fermé et qui s'étend depuis l'extérieur du cylindre vers un point qui, lorsque le piston se trouve au point bas extrême de sont mouvement, est adjacent au sommet de la surface concave du piston.

7. Un système selon la revendication 6, qui comprend un orifice défini par la structure du cylindre à l'extrémité inférieure du cylindre, et relié en alternance pour recevoir cette substance depuis cette source et pour envoyer cette substance vers ces conteneurs.

8. Un système selon la revendication 6 ou la revendication 7, dans lequel la paroi inférieure d'extrémité du cylindre est convexe, et possède une saillie à un point qui, lorsque le piston se trouve au point bas extrême de son mouvement, est adjacente au sommet de la surface concave du piston; et le conduit est défini dans la saillie.

9. Un système selon la revendication 6 ou la revendication 7, qui comprend un trou défini dans la paroi inférieure d'extrémité du cylindre et une tige positionnée de façon réglable dans le trou, une extrémité de la tige étant placée dans le cylindre en vue d'un réglage longitudinal de la tige vers l'intérieur ou l'extérieur du cylindre, le conduit étant défini dans la tige, le trou étant positionné et orienté et la tige étant dimensionnée, de façon à permettre un réglage de l'extrémité intérieure de la tige adjacente au sommet de la surface concave du piston, lorsque le piston se trouve au point le plus bas de son mouvement.

10. Un système selon la revendication 9, dans lequel le trou et la tige sont filetés l'un à l'autre et la tige est réglable en la vissant partiellement vers l'intérieur ou vers l'extérieur du trou, et la tige porte un écrou de verrouillage disposé de façon à être serré contre la paroi d'extrémité du cylindre pour fixer le réglage, et un capuchon fileté au-dessus de l'extrémité de la tige en vue de l'étanchéité du conduit.

Fig. 1.

Fig. 2.

Fig. 3.

2